# EUROPÄISCHE PATENTSCHRIFT

(11) **EP 2 614 975 B1**
(45) Veröffentlichungstag und Bekanntmachung des Hinweises auf die Patenterteilung: **10.06.2020**
(21) Anmeldenummer: 13000085.4
(22) Anmeldetag: 09.01.2013
(51) Int. Cl.: B60J 7/00

(54) **Fahrzeug mit Dachsicherheitssystem**
Vehicle with roof security system
Véhicule avec système de sécurité de toit

(30) Priorität: 10.01.2012 DE 202012000196 U
(43) Veröffentlichungstag der Anmeldung: 17.07.2013
(73) Patentinhaber: Köhler, Johannes, 33165 Lichtenau-Henglarn (DE)
(72) Erfinder: Köhler, Johannes, 33165 Lichtenau-Henglarn (DE)
(74) Vertreter: Schober, Mirko

(56) Entgegenhaltungen:
- EP-A2- 1 523 421
- DE-A1-102008 012 701
- DE-U1-202004 000 295
- DE-U1-202010 001 124

## Beschreibung

Die Erfindung betrifft ein Fahrzeug mit Dachsicherheitssystem nach dem Oberbegriff des Anspruchs 1.

Entsprechende Systeme sind z.B. aus EP 1 523 421 B1 und DE 20 2010 001 124 U1 bekannt. Bei Fahrzeugen wie LKWs wird der Fahrzeugaufbau oftmals mit Planen abgedeckt. Diese haben aufgrund ihrer Flexibilität die Angewohnheit, bei Last auf dem Dachbereich durchzuhängen. Insbesondere sammelt sich bei längeren Standzeiten dort Regenwasser, was im Winter zu Eis gefriert. Vom Dach herunter fallende Eisplatten sind gefährlich, insbesondere für nachfolgende Fahrzeuge, so dass vorgeschlagen wird, unter dem Planendach einen Schlauch oder Blähkörper in Fahrzeuglängsrichtung zu installieren, der mit Luft befüllbar ist. Wird der Schlauch über ein pneumatisches System mit Luft befüllt, so hebt sich die Plane des Daches im Bereich des Schlauches an und auf dem Dach vorhandenes Material wie Eis oder Wasser kann herunter rutschen.

Die DE 10 2008 012 701 A1 offenbart eine Enteisungsvorrichtung, die vom Bremssteuergerät mit gesteuert wird. Die Vorrichtung wird automatisch beim Lösen der Federspeicherbremse aktiviert. Ein Temperatursensor verhindert dieses, wenn von einer Eisbildung nicht ausgegangen werden kann. Ein Geschwindigkeitssensor verhindert das Enteisen während der Fahrt.

DE 20 2004 000 295 U1 offenbart eine Spann-Hebeeinrichtung für ein Fahrzeugplanenoberteil, bei dem der mittig angeordnete Hauptblähkörper von zwei nebengeordneten Blähkörpern unterstützt wird, um die Neigung, insbesondere im Randbereich des Planenoberteils, für das Abrutschen von Schnee und Eis steil genug zu machen. Das Dokument stellt den nächstliegenden Stand der Technik dar und offenbart den Oberbegriff des 1. Anspruchs.

Nachteil der bekannten Lösungen ist, dass keine Information über den Zustand des Blähkörpersystems erfasst und zur Steuerung genutzt wird. Dadurch erfolgt die Befüllung über einen gewissen Zeitraum, ohne dass eine Rückmeldung erfolgt.

Aufgabe der vorliegenden Erfindung ist es, ein Fahrzeug der eingangs genannten Art zu schaffen, bei welchem das Dachsicherheitssystem für den Benutzer noch einfacher bedienbar ist und welches effektiver und zuverlässiger arbeitet, wobei insbesondere die Gefahr von Fehlbedienungen und Beschädigungen verringert wird.

Gelöst wird diese Aufgabe durch ein Fahrzeug mit Dachsicherheitssystem mit den Merkmalen des Anspruchs 1. Vorteilhafte Ausführungsformen finden sich in den Unteransprüchen.

Erfindungsgemäß ist das pneumatische System mit einem Drucksensor ausgestattet. Der Drucksensor ist in der Lage, mit der Steuerung zu kommunizieren. Die Steuerung koordiniert den Befüllungs- bzw. Entleerungsvorgang des Blähkörpers. Dadurch wird es möglich, den Füllstand des Blähkörpers jederzeit zu erfassen, etwa auch dann, wenn Leckagen auftreten oder dergleichen, etwa dann, wenn der Drucksensor einen Fehler anzeigt oder der gemessene Druck einem bestimmten Sollwert nicht entspricht.

Damit das Dachsicherheitssystem insbesondere leicht zu bedienen ist, ist ein Schalter zur manuellen Aktivierung des pneumatischen Systems vorgesehen, der mit dem pneumatischen System gekoppelt ist. Der Schalter ist vorteilhafterweise so ausgebildet, dass er das pneumatische System nur bei Stillstand des Fahrzeugs aktivieren kann. Dazu kann der Schalter so ausgelegt sein, dass beim Druck auf diesen geprüft wird, ob die Bremse betätigt ist und/oder die Räder des Fahrzeugs still stehen. Bei einem so ausgebildeten Schalter kann dieser auch entfernt von der Steuerung, insbesondere in der Fahrerkabine des Fahrzeugs vorgesehen sein.

Weiter ist bevorzugt eine Anzeige vorgesehen, die anzeigt, ob der vom Drucksensor gemessene Istwert dem vorgegebenen Druckwert, d. h. in der Regel dem maximalen Druck, der im Blähkörper herrschen soll, entspricht oder nicht. Insbesondere ist dabei eine LED-Anzeige vorgesehen, die rot leuchtet, wenn der vorgegebene Druckwert erreicht oder überschritten ist und sonst grün leuchtet.

In dem pneumatischen System, welches vorteilhafterweise in einem Metallblock untergebracht ist und so sehr kompakt ausgeführt werden kann, ist der Drucksensor bevorzugt parallel zur Füll- und Evakuierungsleitung des Blähkörpers geschaltet.

Die Steuerung ist vorteilhafterweise mit dem pneumatischen System gekoppelt, wobei das pneumatische System einen ersten Strömungsweg mit einem ersten Ventil zum Befüllen des Blähkörpers und einen zweiten Strömungsweg zum Evakuieren des Blähkörpers mit einem zweiten und einem dritten Ventil (46) aufweist. Dabei kann vorgesehen sein, dass der erste Strömungsweg von der Druckeingangsseite des pneumatischen Systems über das erste Ventil durch eine Venturi-Düse und über das zweite Ventil zur an einem ersten Druckausgang angeschlossenen Füll- und Evakuierungsleitung führt. Der vorgesehene Schalter ist dann zur Betätigung des ersten Ventils und/oder zweiten Ventils ausgelegt.

Bevorzugt führt der zweite Strömungsweg von der Druckeingangsseite des pneumatischen Systems über das dritte Ventil durch die Venturi-Düse zu einem Entlüftungsanschluss des pneumatischen Systems, wobei der Unterdruckanschluss der Venturi-Düse mit der am ersten Druckausgang angeschlossenen Füll- und Evakuierungsleitung verbunden ist. Der Entlüftungsanschluss dient zur Schnellentlüftung des Systems und schafft für den Luftstrom eine kurze Verbindung nach außen, so dass zur Schnellentlüftung der Luftstrom nicht durch das gesamte pneumatische System hindurch geleitet werden muss. Das erste Ventil ist bevorzugt ein Mehrwege-Ventil. Das zweite Ventil ist bevorzugt als ein entriegelbares Ventil ausgebildet, um ggf. auch die umgekehrte Strömungsrichtung zu ermöglichen. Auch das dritte Ventil kann bevorzugt als ein Mehrwege-Ventil ausgebildet sein.

Die erfindungsgemäße Steuerung arbeitet so, dass regelmäßig der im Drucksensor gemessene Druck abgefragt wird.

Falls der Drucksensor keinen Fehler detektiert, wird ein eventuell laufender Befüllungs- bzw. Evakuierungsprozess nach Verstreichen einer vorgegebenen Maximalzeitdauer abgebrochen. Sonst wird der am Drucksensor gemessene Druck mit dem voreingestellten Maximaldruck verglichen. Ist der Maximaldruck erreicht oder überschritten, wird der Befüllvorgang abgebrochen. Liegt der Druck unter dem voreingestellten Maximaldruck, wird ein laufender Entleerungsvorgang abgebrochen.

Falls ein Fehler bei der Druckmessung detektiert wird, wird der Befüllungs- oder Entleerungsvorgang sofort abgebrochen. Bei betätigter Fahrzeugbremse wird dann der Blähkörper aus Sicherheitsgründen zunächst evakuiert.

Anschließend wird von der Steuerung abgefragt, ob der Schalter betätigt worden ist. Falls dies der Fall ist, wird geprüft, ob der Blähkörper befüllbar ist. Wenn er befüllbar ist, wird der Befüllvorgang gestartet. Wenn er bereits gefüllt ist, wird der Blähkörper entleert.

Anschließend wartet das System eine vorgegebene Zeitdauer. Solange diese nicht verstrichen ist, wird der Druck weiter gemessen und die oben genannten Abfragen werden durchlaufen. Ist die vorgegebene Zeitdauer verstrichen, wird der Befüll- oder Entleerungsvorgang abgebrochen und der Steuerung der Füllzustand des Blähkörpers als Statusmitteilung übergeben.

Die Erfindung wird nun anhand der Figuren 1 bis 4 schematisch näher erläutert:
- Figur 1 -: zeigt eine Teilansicht des Dachaufbaus eines erfindungsgemäßen Fahrzeugs.
- Figur 2 -: zeigt ein Blockschaltbild der Fahrzeugsteuerung mit angeschlossener Elektrik und dem pneumatischen System.
- Figur 3 -: zeigt ein Schaltbild des pneumatischen Systems.
- Figur 4 -: ist ein Flussdiagramm zur Erläuterung der erfindungsgemäßen Steuerung.

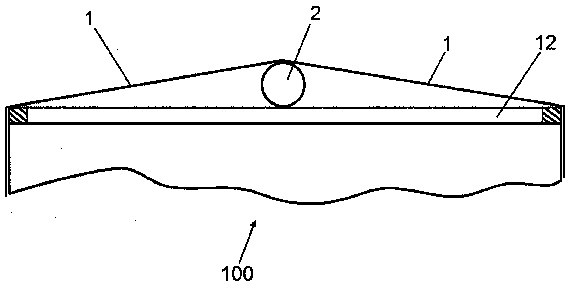

Der in Figur 1 gezeigte Teil des Dachs des erfindungsgemäßen Fahrzeugs 100 weist quer zur Fahrtrichtung verlaufende Querspriegel 12 auf, auf denen ein sich im Wesentlichen in Fahrzeuglängsrichtung erstreckender schlauchförmiger Blähkörper 2 befindet, der in der Regel mit den Querspriegeln über Gurte oder Schnallen verbunden ist. Der Blähkörper ist zwischen Querspriegel 12 und Dachplane 1 angeordnet. Wird der Blähkörper mit Luft befüllt, so dehnt er sich aus und hebt das Dach 1 an, wie in Figur 1 gezeigt. So kann Wasser oder auch Eis auf dem Dach herunter rutschen.

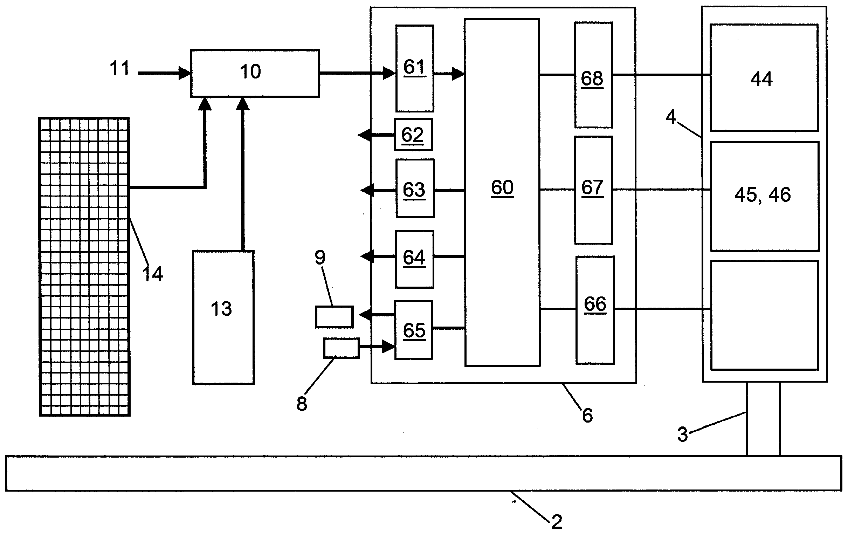

In dem in Figur 2 gezeigten Blockschaltbild ist die Steuerung des Systems mit 6 bezeichnet. Diese ist einerseits zur Spannungsversorgung mit der Fahrzeugelektrik, dem Fahrzeugnetz 14, einer Batterie 13 oder/und einem Solarregler 10 gekoppelt, deren Ausgänge über einen Spannungsregler 61 der Steuerung zugeführt sind. Die Steuerung selbst umfasst eine Zentralrechnereinheit 60, die die Ein- und Ausgänge der Steuerung 6 ausliest bzw. anspricht.

Die Steuerung kann z. B. über ein Relais 63 mit einem GPS-System gekoppelt sein, um die Position des Fahrzeugs bestimmen zu können und zur Wartung weiterzuleiten. Weiter kann ein 24V-Spannungsausgang 62 vorgesehen sein.

Über einen Optokoppler 64 kann der Zustand der Fahrzeugbremse ausgelesen werden, damit sicher gestellt ist, dass das pneumatische System nicht während der Fahrt aktiviert wird. Weiter können LEDs (rot/grün) über einen I/O-Port 65 angesprochen werden, der ebenfalls die Betätigung des Schalters 8 durch den Fahrer an die Zentralrechnereinheit 60 meldet. LEDs und der Schalter 8 können an der Steuerung angeordnet sein oder auch entfernt von dieser, insbesondere können sie in der Fahrerkabine des Fahrzeugs vorgesehen werden.

Weiter ist die Steuerung mit dem pneumatischen System 4 gekoppelt. Über Optokoppler 67, 68 können Ventile 46, 44 45, angesprochen werden. Über ein Bussystem steht der Drucksensor 7 des pneumatischen Systems 4 mit der Steuerung 6 und der Zentralrechnereinheit 60 in Verbindung. Über eine Füll- und Evakuierungsleitung 3 ist das pneumatische System mit dem Blähkörper 2 verbunden.

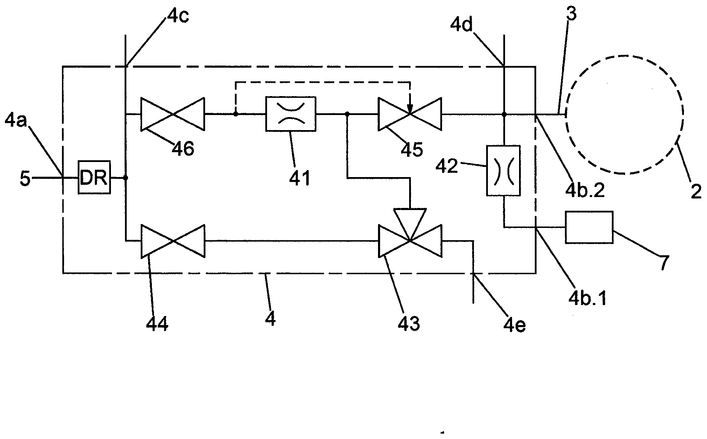

Das pneumatische System 4 ist im Detail in Figur 3 dargestellt. Es wird gespeist durch eine Zuführeinrichtung 5, insbesondere eine Druckleitung. Die erforderliche Druckluft kann z. B. aus dem Überdruckventil eines Fahrzeugbremssystems (nicht gezeigt) entnommen werden. Die am Eingang 4a des pneumatischen Systems 4 ankommende Luft wird über einen Druckregler DR geführt, um einen Systemdruck einzuregeln, der über einen Messausgang 4c etwa über ein Manometer erfasst werden kann.

Wird der Schalter zum Befüllen betätigt, wird ein erster Strömungsweg geöffnet, der über das Ventil 44, das Mehrwege-Ventil 43 und das entriegelbare Ventil 45 über den Ausgang 4b.2 in die Füll- und Evakuierungsleitung 3 und so in den Blähkörper 2 führt. Wird der Druck zu hoch, dient ein Überströmausgang 4d als Sicherheitsventil. Neben dem Ausgang 4b.2 strömt die Luft beim Befüllen auch über eine Düse 42 zum Ausgang 4b.1, an welchem der Drucksensor 7 angeschlossen ist, so dass dieser beim Befüllen des Blähkörpers 2 den Druck messen kann.

Wird der Schalter zum Entleeren betätigt, so öffnet sich durch die Steuerung vermittelt das Ventil 46 und damit ein zweiter Strömungsweg, welcher durch das Ventil 46, eine Venturi-Düse 41 und das Mehrwegeventil 43 zum Entlüftungsauslass 4e führt. Über den Unterdruckanschluss der Venturi-Düse 41 wird Luft angesaugt, welche aus dem Blähkörper 2 über die Füll- und Evakuierungsleitung 3 in das hierzu durch die Steuerung entriegelte Ventil 45 und von dort in die Venturi-Düse 41 und weiter in den Entlüftungsauslass 4e strömt.

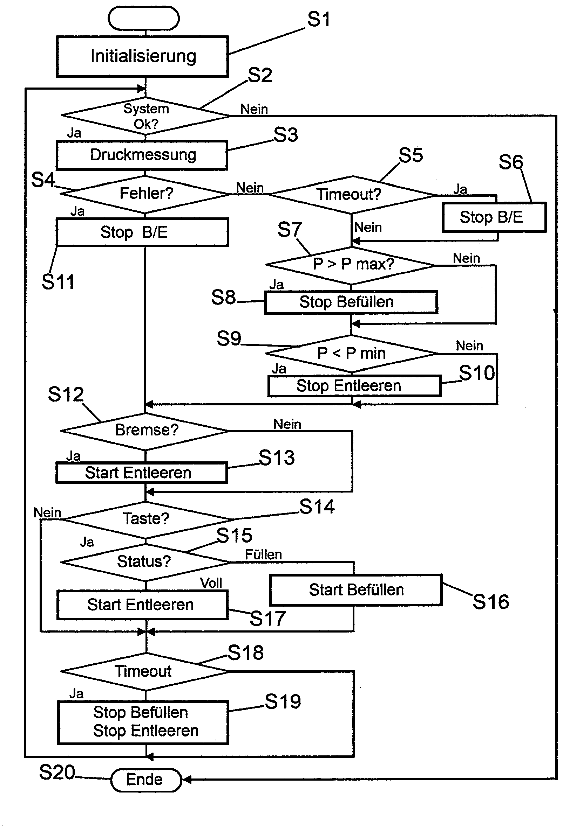

Wie in Figur 4 gezeigt, arbeitet die Steuerung wie folgt:
Nach Ausführung des Steuerprogramms erfolgt in Schritt S1 eine Initialisierung des Systems. Anschließend wird in Schritt S2 entschieden, ob das System einsatzbereit ist.

Wenn nein, wird das Steuerprogramm beendet, Schritt S20.

Bei positivem Systemcheck in Schritt S2 erfolgt eine Druckmessung in Schritt S3, mit der der Druck aus dem Sensor 7 (vgl. Fig. 3) ausgelesen wird. In Schritt S4 wird geprüft, ob der vom Drucksensor 7 zurückgegebene Wert plausibel ist oder die übermittelten Daten nicht erwartete Bestandteile haben. Wird ein nicht plausibler Wert in Schritt S4 festgestellt, liegt ein Fehler vor, es wird dann der Befüll- bzw. der Entleerungsvorgang in Schritt S11 beendet.

Liegt kein Fehler vor, so fährt die Steuerung mit Schritt S5 fort, in dem die Steuerung für eine vorgegebene Zeit (Timeout-Zeit) wartet, ob etwas geschieht, d. h. ob ein korrekter Druckwert (p) an die Steuerung übermittelt wurde. Falls JA wird der Befüll- bzw. Entleerungsvorgang beendet, Schritt S6. Falls NEIN erfolgt eine Prüfung, ob der erfasste Druck p einen vorgegebenen, auf den Blähkörper abgestimmten Maximaldruck pmax erreicht oder überschritten hat, Schritt S7. Falls in S7 festgestellt wird, dass der Maximalwert pmax erreicht oder überschritten wurde, wird in Schritt S8 der Befüllvorgang gestoppt. Wenn der p den Wert pmax noch nicht erreicht hat, wird als nächstes in Schritt S9 geprüft, ob der vom Drucksensor gemessene Druck p einen vorgegebenen Minimalwert, der für die vollständige Evakuierung des Blähkörpers steht, erreicht oder unterschritten hat.

Wenn pmin nicht erreicht wurde, fährt die Steuerung mit Schritt S12 fort. Wenn pmin erreicht oder unterschritten wurde, wird in Schritt S10 der Entleerungsvorgang gestoppt und die Steuerung fährt mit Schritt S12 fort.

In Schritt S12 wird geprüft, ob das Fahrzeug still steht, z. B. ob die Bremse betätigt ist oder alternativ oder ergänzend die Räder des Fahrzeugs sich bewegen. Letzeres kann z. B. über einen entsprechenden Bewegungssensor erfasst werden. Sicherheitshalber soll ein Befüllvorgang des Blähkörpers nur bei einem nicht fahrenden Fahrzeug möglich sein. Wenn die Bremse nicht betätigt ist oder die Räder nicht still stehen, fährt die Steuerung mit Schritt S14 fort; wenn die Bremse betätigt ist oder die Räder stillstehen, wird zunächst der Entleerungsvorgang des Blähkörpers gestartet, dann fährt die Steuerung mit Schritt S14 fort.

In Schritt S14 wird geprüft, ob der Schalter zum Füllen oder Entleeren gedrückt worden ist. Wenn nein, fährt die Steuerung mit Schritt S18 fort und wartet eine vorgegebene Zeit (Timeoutzeit). Solange die vorgegebene Wartezeit nicht erreicht ist, springt die Steuerung zu Schritt S2 zurück. Ist die Timeoutzeit erreicht, wird entweder der laufende Befüllvorgang oder der laufende Entleerungsvorgang gestoppt und der Systemstatus entsprechend auf VOLL oder LEER/BEFÜLLBAR gestellt. Dieser Status kann in der Anzeige in der Fahrerkabine durch eine rote bzw. grüne LED-Anzeige sichtbar gemacht werden.

Anschließend fährt die Steuerung mit Schritt S2 fort.

Wird in Schritt S14 die Betätigung des Schalters positiv festgestellt, ist also der Schalter gedrückt, wird der Status des Systems VOLL oder LEER/BEFÜLLBAR ausgelesen. Falls in Schritt S15 gefunden wird, dass der Status VOLL ist, wird in Schritt S17 der Entleerungsvorgang gestartet und die Steuerung fährt mit Schritt S18 fort. Wird in Schritt S15 entschieden, dass der Status LEER/BEFÜLLBAR ist, wird in Schritt S16 der Befüllvorgang gestartet und die Steuerung fährt mit Schritt S18 fort.

Auf diese Weise kann eine zuverlässige Steuerung der Befüllung oder Entleerung des Blähkörpers sicher gestellt werden, wobei der Fahrer jederzeit über den Zustand des Systems informiert ist.

## Patentansprüche

1. Fahrzeug mit Dachsicherheitssystem und Abdeckplane (1) und einem die Abdeckplane (1) tragenden Fahrzeugaufbau (12), wobei das Dachsicherheitssystem einen mit Fluid befüllbaren Blähkörper (2), insbesondere einen Schlauch aufweist, der zwischen Fahrzeugaufbau (12) und Abdeckplane (1) angeordnet und dazu ausgelegt ist, beim Befüllen zur Vermeidung oder Beseitigung von Ansammlungen, insbesondere Wasser, auf der Dachfläche die Abdeckplane (1) anzuheben, wobei der Blähkörper (2) an eine Füll- und Evakuierungsleitung (3) angeschlossen ist, die über ein pneumatisches System (4) mit einer an dessen Druckeingangsseite (4a) angeordneten Zuführeinrichtung (5) verbunden ist, durch welche ein vorgegebener Luftdruck an der Druckeingangsseite (4a) des pneumatischen Systems (4) anliegt, wobei weiter eine Steuerung (6) vorgesehen ist, welche dazu ausgelegt ist, die Befüllung bzw. Evakuierung des Blähkörpers (2) zu steuern, wobei die Steuerung weiter so ausgelegt ist, dass die Befüllung des Blähkörpers (2) bei Erreichen eines vorgegebenen Druckwertes gestoppt wird,
**dadurch gekennzeichnet,**
**dass** an der Druckausgangsseite (4b.1) des pneumatischen Systems (4) ein mit der Steuerung (6) kommunizierender Drucksensor (7) vorgesehen ist, der den im Blähkörper (2) herrschenden Druck zur Übermittlung an die Steuerung (6) erfasst.

2. Fahrzeug nach Anspruch 1,
**dadurch gekennzeichnet,**
**dass** ein Schalter (8) zur manuellen Aktivierung des pneumatischen Systems (4) vorgesehen ist.

3. Fahrzeug nach Anspruch 2,
**dadurch gekennzeichnet,**
**dass** der Schalter (8) so ausgelegt ist, dass er nur bei Stillstand des Fahrzeugs das pneumatische System aktivieren kann.

4. Fahrzeug nach einem der vorigen Ansprüche,
**dadurch gekennzeichnet,**
**dass** der Drucksensor (7) parallel zur Füll- und Evakuierungsleitung (3) des Blähkörpers (2) geschaltet ist.

5. Fahrzeug nach einem der vorigen Ansprüche,
**dadurch gekennzeichnet,**
**dass** eine Anzeige (9) vorgesehen ist, die anzeigt, ob der vom Drucksensor (7) gemessene Istwert dem vorgegebenen Druckwert entspricht oder nicht.

6. Fahrzeug nach Anspruch 5,
**dadurch gekennzeichnet,**
**dass** eine LED-Anzeige (9) vorgesehen ist, die Rot leuchtet, wenn der vorgegebene Druckwert erreicht oder überschritten ist und sonst Grün leuchtet.

7. Fahrzeug nach einem der vorigen Ansprüche,
**dadurch gekennzeichnet,**
**dass** die Steuerung (6) mit dem pneumatischen System (4) gekoppelt ist, wobei das pneumatische System einen ersten Strömungsweg mit einem ersten Ventil (44) zum Befüllen des Blähkörpers (2) und einem zweiten Strömungsweg zum Evakuieren des Blähkörpers (2) mit einem zweiten (45) und einem dritten Ventil (46) aufweist.

8. Fahrzeug nach Anspruch 7,
**dadurch gekennzeichnet,**
**dass** der erste Strömungsweg von der Druckeingangsseite (4a) des pneumatischen Systems (4) über das erste Ventil (44) durch eine Venturi-Düse (41) und über das zweite Ventil (45) zur an einem ersten Druckausgang (4b.2) angeschlossenen Füll- und Evakuierungsleitung (3) führt.

9. Fahrzeug nach Anspruch 7 oder 8,
**dadurch gekennzeichnet,**
**dass** der Schalter (9) zur Betätigung des ersten Ventils (44) und/oder zweiten Ventils (45) ausgelegt ist.

10. Fahrzeug nach Anspruch 9
**dadurch gekennzeichnet,**
**dass** der zweite Strömungsweg von der Druckeingangsseite (4a) des pneumatischen Systems (4) über das dritte Ventil (46) durch die Venturi-Düse (41) zu einem Entlüftungsanschluss (4e) des pneumatischen Systems (4) führt, wobei der Unterdruckanschluss der Venturi-Düse (41) mit der am ersten Druckausgang (4b.2) angeschlossenen Füll- und Evakuierungsleitung (3) verbunden ist.

11. Fahrzeug nach einem der Ansprüche 5 bis 10,
**dadurch gekennzeichnet,**
**dass** das erste Ventil (44) ein Mehrwege-Ventil ist.

12. Fahrzeug nach einem der Ansprüche 7 bis 11,
**dadurch gekennzeichnet,**
**dass** das zweite Ventil (45) ein entriegelbares Ventil ist.

13. Fahrzeug nach einem der Ansprüche 7 bis 12,
**dadurch gekennzeichnet,**
**dass** das dritte Ventil (46) ein Mehrwege-Ventil ist.

14. Fahrzeug nach einem der vorigen Ansprüche,
**dadurch gekennzeichnet,**
**dass** das pneumatische System (4) in einem Metallblock untergebracht ist.

## Claims

1. Vehicle with roof security system and tarpaulin cover (1) and a vehicle structure (12) supporting the tarpaulin cover (1), wherein the roof security system comprises an inflatable body (2) which can be filled with a fluid, in particular a tube which is arranged between the vehicle structure (12) and the tarpaulin cover (1) and which is designed to raise up the tarpaulin cover (1) when filled to prevent or remove accumulations, in particular water, on the roof surface, wherein the inflatable body (2) is connected to a filling and evacuating line (3) which is connected via a pneumatic system (4) to a supply unit (5) which is situated on the pressure input side (4a) of the pneumatic system and through which a predetermined air pressure bears against the pressure input side (4a) of the pneumatic system (4), wherein a control (6) is further provided which is designed to control the filling and evacuating of the inflatable body (2) wherein the control is further designed so that the filling of the inflatable body (2) is stopped when a predetermined pressure value is reached,
**characterised in that**
a pressure sensor (7) which communicates with the control (6) is provided at the pressure output side (4b.1) of the pneumatic system (4) and detects the pressure prevailing in the inflatable body (2) which is to be transmitted to the control (6).

2. Vehicle according to claim 1
**characterised in that**
a switch (8) is provided for manually activating the pneumatic system (4).

3. Vehicle according to claim 2
**characterised in that**
the switch (8) is designed so that it can only activate the pneumatic system when the vehicle is stationary.

4. Vehicle according to one of the preceding claims **characterised in that**
the pressure sensor (7) is switched parallel to the filling and evacuating line (3) of the inflatable body (2) .

5. Vehicle according to one of the preceding claims **characterised in that**
an indicator (9) is provided which indicates whether the actual value measured by the pressure sensor (7) does or does not correspond to the predetermined pressure value.

6. Vehicle according to claim 5
**characterised in that**
an LED indicator (9) is provided which lights up red when the predetermined pressure value is reached or exceeded but otherwise lights up green.

7. Vehicle according to one of the preceding claims **characterised in that**
the control (6) is coupled to the pneumatic system (4) wherein the pneumatic system has a first flow path with a first valve (44) for filling the inflatable body (2), and a second flow path for actuating the inflatable body (2) with a second (45) and a third valve (46).

8. Vehicle according to claim 7
**characterised in that**
the first flow path leads from the pressure input side (4a) of the pneumatic system (4) via the first valve (44) through a Venturi nozzle (41) and via the second valve (45) to the filling and evacuating line (3) which is attached to the first pressure output (4b.2).

9. Vehicle according to claim 7 or 8
**characterised in that**
the switch (9) is designed for actuating the first valve (44) and/or the second valve (45).

10. Vehicle according to claim 9
**characterised in that**
the second flow path leads from the pressure input side (4a) of the pneumatic system (4) via the third valve (46) through the Venturi nozzle (41) to a ventilation connection (4e) of the pneumatic system (4), wherein the negative pressure connection of the Venturi nozzle (41) is connected to the filling and evacuating line (3) which is attached to the first pressure output (4b.2).

11. Vehicle according to one of claims 5 to 10
**characterised in that**
the first valve (44) is a multiway valve.

12. Vehicle according to one of claims 7 to 11
**characterised in that**
the second valve (45) is an unlockable valve.

13. Vehicle according to one of claims 7 to 12
**characterised in that**
the third valve (46) is a multiway valve.

14. Vehicle according to one of the preceding claims, **characterised in that**
the pneumatic system (4) is housed in a metal block.

## Revendications

1. Véhicule avec système de sécurité de toit et bâche (1) et avec une structure de véhicule (12) qui porte la bâche (1), sachant que le système de sécurité de toit présente un corps gonflable (2), en particulier un tuyau, qui, pouvant être rempli de fluide, est disposé entre la structure de véhicule (12) et la bâche (1) et est destiné, lors du remplissage, à éviter et à éliminer les accumulations, en particulier d'eau, sur la surface du toit, en soulevant la bâche (1), sachant que le corps gonflable (2) est raccordé à une conduite de remplissage et d'évacuation (3), qui, par le biais d'un système pneumatique (4), est reliée à une installation d'alimentation (5) disposée sur son côté d'entrée de pression (4a), au moyen de laquelle une pression d'air prédéterminée est appliquée sur le côté d'entrée de pression (4a) du système pneumatique (4), sachant que de plus est prévue une commande (6) pour le réglage du remplissage, respectivement de l'évacuation du corps gonflable (2), sachant que la commande sert en outre à stopper le remplissage du corps gonflable (2) quand une valeur de pression prédéterminée est atteinte,
**caractérisé en ce que**,
sur le côté d'entrée de pression (4b.1) du système pneumatique (4), est prévu un capteur de pression (7), qui, communiquant avec la commande (6), capte la pression régnant dans le corps gonflant (2) pour transmission à la commande (6).

2. Véhicule selon la revendication 1,
**caractérisé en ce**
**qu'**un commutateur (8) est prévu pour activer manuellement le système pneumatique (4).

3. Véhicule selon la revendication 2,
**caractérisé en ce que**
le commutateur (8) est conçu de sorte qu'il ne puisse activer le système pneumatique que lorsque le véhicule est arrêté.

4. Véhicule selon l'une des revendications précédentes,
**caractérisé en ce que**
le capteur de pression (7) est connecté en parallèle par rapport à la conduite de remplissage et d'évacuation (3) du corps gonflable (2).

5. Véhicule selon l'une des revendications précédentes,
**caractérisé en ce**
**qu'**est prévu un affichage (9), qui indique si la valeur réelle, mesurée par le capteur de pression (7) correspond ou ne correspond pas à la valeur de pression prédéterminée.

6. Véhicule selon la revendication 5,
**caractérisé en ce**
**qu'**est prévu un affichage LED (9), qui est allumé rouge quand une valeur de pression prédéterminée est atteinte ou surpassée et sinon est allumé vert.

7. Véhicule selon l'une des revendications précédentes,
**caractérisé en ce que**
la commande (6) est couplée avec le système pneumatique (4), sachant que le système pneumatique présente une première voie d'écoulement avec une première vanne (44) pour le remplissage du corps gonflable (2) et une deuxième voie d'écoulement pour l'évacuation hors du corps gonflables (2) avec une deuxième (45) et une troisième vanne (46) .

8. Véhicule selon la revendication 7,
**caractérisé en ce que**
la première voie d'écoulement conduit du côté d'entrée de pression (4a) du système pneumatique (4), par l'intermédiaire de la première vanne (44) par une buse venturi (41) et par l'intermédiaire de la deuxième vanne (45), à une conduite de remplissage et d'évacuation (3) raccordée à une première sortie de pression (4b.2).

9. Véhicule selon la revendication 7 ou 8,
**caractérisé en ce que**
le commutateur (9) est conçu pour l'actionnement de la première vanne (44) et / ou de la deuxième vanne (45).

10. Véhicule selon la revendication 9,
**caractérisé en ce que**
la deuxième voie d'écoulement conduit du côté d'entrée de pression (4a) du système pneumatique (4) à un raccord de désaération (4e) du système pneumatique (4) par l'intermédiaire de la troisième vanne (46), par la buse venturi (41), sachant que le raccord de pression négative de la buse venturi (41) est relié à la conduite de remplissage et d'évacuation (3) raccordée à la première sortie de pression (4b.2).

11. Véhicule selon l'une des revendications 5 à 10, **caractérisé en ce que**
la première vanne {44) est une vanne à voies multiples.

12. Véhicule selon l'une des revendications 7 à 11, **caractérisé en ce que**
la deuxième vanne (45) est une vanne déverrouillable.

13. Véhicule selon l'une des revendications 7 à 12, **caractérisé en ce que**
la troisième vanne (46) est une vanne à voies multiples.

14. Véhicule selon l'une des revendications précédentes,
**caractérisé en ce que**
le système pneumatique {4) est logé dans un bloc métallique.
